# NEUE EUROPÄISCHE PATENTSCHRIFT

(11) **EP 1 943 437 B2**
(45) Veröffentlichungstag und Bekanntmachung des Hinweises auf die Entscheidung über den Einspruch: **20.09.2023**
(45) Hinweis auf die Patenterteilung: 19.06.2019
(21) Anmeldenummer: 06828913.1
(22) Anmeldetag: 02.11.2006
(51) Int. Cl.: F16F 15/131, F16D 25/10

(54) **KOMBINATION AUS EINEM TORSIONSSCHWINGUNGSDÄMPFER MIT EINER KURBELWELLE**
COMBINATION OF A TORSIONAL-VIBRATION DAMPER AND A CRANKSHAFT
COMBINAISON D'UN AMORTISSEUR DE VIBRATIONS DE TORSION ET D'UN VILLEBREQUIN

(30) Priorität: 04.11.2005 DE 102005053073; 26.01.2006 DE 102006003955
(43) Veröffentlichungstag der Anmeldung: 16.07.2008
(73) Patentinhaber: BorgWarner, Inc., Auburn Hills, MI 48326-2872 (US)
(72) Erfinder: EBNER, Till Martin Lutz, 64342 Seeheim-Jugenheim (DE); HEINZ, Volker, 67354 Roemerberg (DE); STRAUSS, Dietmar, Ernst, 76703 Kraichtal (DE); HALM, Christian, 69190 Walldorf (DE); BÖLLING, Jochen, 76534 Baden-Baden (DE)
(74) Vertreter: Leckel, Ulf
(86) Internationale Anmeldenummer: PCT/EP2006/010538
(87) Internationale Veröffentlichungsnummer: WO 2007/051627

(56) Entgegenhaltungen:
- EP-A- 1 726 847
- DE-A1- 3 411 090
- DE-A1- 3 427 163
- DE-A1- 10 118 821
- DE-A1- 19 522 718
- DE-A1- 19 957 978
- FR-A- 2 858 674

## Beschreibung

Die Erfindung betrifft eine Kombination aus einer Kurbelwelle und einem Torsionsschwingungsdämpfer sowie eine solche Kombination in Verbindung mit einer Kupplung.

Torsions- oder Drehschwingungsdämpfer sind aus dem Stand der Technik in einer Vielzahl von Abwandlungen und aus verschiedenen Anwendungsbereichen bekannt. Insbesondere werden sie im Kraftfahrzeugbau zur elastischen Kopplung von Verbrennungskraftmaschine und Antriebsstrang eingesetzt. Auf diese Weise soll verhindert werden, dass Schwingungen von der Seite der Verbrennungskraftmaschine auf den Antriebsstrang bzw. das Getriebe übertragen werden. Eine solche Übertragung von Schwingungen ist bei Kraftfahrzeugantrieben vor allen Dingen bei Verbrennungskraftmaschinen mit vergleichsweise wenig Zylindern und bei niedrigen Drehzahlen gegeben. Bei effektiver Dämpfung derartiger Schwingungen kann die Verbrennungskraftmaschine mit niedrigeren Drehzahlen betrieben werden, was im Allgemeinen einen verringerten Kraftstoffverbrauch zur Folge hat und somit sowohl ökonomisch als auch ökologisch von Vorteil ist.

Aus der EP 1 371 875 A1 und der DE 195 22 718 A1 sind Torsionsschwingungsdämpfer mit einem antriebsseitigen Primärelement und einem abtriebsseitigen Sekundärelement bekannt, wobei Primär- und Sekundärelement in Umfangsrichtung über eine Federeinrichtung miteinander gekoppelt und um eine Neutralposition gegeneinander verdrehbar sind. Primär- wie Sekundärelement umfassen jeweils wenigstens einen Mitnehmer, welche im Folgenden als Primärmitnehmer bzw. Sekundärmitnehmer bezeichnet werden. Ein antriebsseitig am Primärelement anliegendes Drehmoment wird mittels des Primärmitnehmers zunächst auf die Federeinrichtung und von dort auf den Sekundärmitnehmer des Sekundärelements übertragen.

Die genannte Federeinrichtung besteht beispielsweise aus einem oder mehreren in Umfangsrichtung des ringförmigen Teils des Torsionsschwingungsdämpfers hintereinander angeordneten Federelementen, welche vorzugsweise als Schraubenfedern bzw. Schraubenfedersätze ausgeführt sind. Zwischen den Federelementen sind Gleitschuhe angeordnet, welche die aufeinander folgenden Federelemente miteinander verbinden. An den Federeinrichtungen sind beidendseitig Endschuhe angeordnet, welche die Federeinrichtung gegen die jeweiligen Mitnehmer abstützen. Anstelle von Gleitschuhen können auch sogenannte Dividerbleche vorgesehen sein, um die einzelnen Federelemente voneinander zu trennen. Unterschiedliche Ausführungsvarianten sind z.B. in der europäischen Patentanmeldung mit der Anmeldenummer 04 008 489.9 beschrieben.

Erfolgt in einem Torsionsschwingungsdämpfer eine Drehmomentübertragung vom mit dem Antrieb verbundenen Primärelement zum abtriebsseitigen Sekundärelement, so wird diese Drehmomentübertragung als Schub bezeichnet. Eine Drehmomentübertragung in die entgegengesetzte Richtung vom Sekundärelement auf das Primärelement wird Zug genannt.

Wird ein derartiger Dämpfer mit einer Abtriebswelle eines Getriebes unmittelbar oder z.B. unter Zwischenschaltung einer Kupplung, z.B. einer Doppelkupplung, gekoppelt, so beobachtet man immer wieder eine erhöhte Neigung zum vorzeitigen Verschleiß der dem Torsionsschwingungsdämpfer nachgeschalteten Komponenten. Diese erhöhte Neigung zum vorzeitigen Verschleiß geht in aller Regel mit einer erhöhten Geräuschentwicklung des Systems Torsionsschwingungsdämpfer - Getriebe bzw. Torsionsschwingungsdämpfer - Kupplung - Getriebe einher.

Eine weitere Geräuschquelle ergibt sich aus ungenügend gelagerten Massen, die zu größeren Unwuchten führen können.

Die DE 34 27 163 A1 beschreibt die Anbindung einer Kurbelwelle an die Primärmasse eines Torsionsschwingungsdämpfers vermittels einer Schwungscheibe, wobei die Primärmasse in axialer Richtung relativ zu der Schwungscheibe bewegbar ist.

Die DE 199 57 978 A1 beschreibt eine Kombination aus einem Torsionsschwingungsdämpfer und einer Kurbelwelle, bei der die Primärmasse spielfrei mit der Kurbelwelle verbunden ist. Primärmasse und Sekundärmasse des Dämpfers sind derart angeordnet, dass diese in Axialrichtung relativ zueinander bewegbar sind. Ähnliche Kombinationen sind überdies aus der DE 195 22 718 A1, der FR 2 858 674 und der DE 34 11 090 A1 bekannt, bei denen die Primärseiten des Dämpfers ebenfalls spielfrei mit der Kurbelwelle verbunden sind.

Der Erfindung liegt nunmehr die Aufgabe zugrunde, eine Kombination aus Kurbelwelle und Torsionsschwingungsdämpfer der gattungsgemäßen Art derart auszuführen und weiterzubilden, dass abtriebsseitig angeschlossene Komponenten und der Torsionsschwingungsdämpfer selbst weniger zu frühzeitigem Verschleiß neigen als Systeme bzw. Torsionsschwingungsdämpfer nach dem Stand der Technik und dass eine Geräuschentwicklung im Betrieb gemindert wird.

Diese Aufgabe wird durch eine Kombination mit den Merkmalen des Patentanspruchs 1 gelöst.

Vorteilhafte Ausführungen und Weiterbildungen der Erfindung sind in den Unteransprüchen angegeben.

Die Erfindung beruht unter anderem auf der Erkenntnis, dass beim Betrieb eines Kupplungsdämpfermoduls Bewegungsunregelmäßigkeiten und Geräusche unter anderem dadurch auftreten, dass die Dämpfer-Primärmasse, das heißt der antriebsseitige Teil des Torsionsdämpfers, mit der Motormasse nicht spielfrei verbunden ist.

Hierdurch kann in Axial- und Radialrichtung ein Spiel entstehen, das bei den entsprechenden, gelegentlich unregelmäßigen Bewegungen einer Kurbelwelle zu Relativbewegungen wie Klappern mit entsprechender Geräuschentwicklung und Abnutzung führen kann. Bei einer spielfreien Anbindung ergeben sich dagegen bisher generell Probleme mit Fertigungstoleranzen, die beim Zusammenbau der Motorgetriebeeinheit ausgeglichen werden müssen.

Es ist weiter erkannt worden, dass bei Torsionsschwingungsdämpfern im allgemeinen zwischen Primärelement und Sekundärelement ein Spiel in Radialrichtung bezüglich der Drehachse besteht. Darüber hinaus besteht stets z.B. aufgrund von Fertigungstoleranzen die Gefahr des Auftretens von Unwuchten bei rotierenden Teilen, wie sie das Primärelement und das Sekundärelement darstellen. Zusätzlich treten oft auch radiale Versätze zwischen einer den Torsionsschwingungsdämpfer primärseitig antreibenden Welle, den Primär- und Sekundärelementen selbst sowie den nachgeschalteten Komponenten, wie z.B. einer Abtriebswelle oder einer nachgeschalteten Kupplung auf. Sofern zwischen Torsionsschwingungsdämpfer und den nachgeschalteten Komponenten eine vergleichsweise starre Verbindung besteht, verursachen Unwuchten, radiale Versätze oder dergleichen radiale Kräfte, welche vom Torsionsschwingungsdämpfer an die nachgeschalteten Komponenten weitergegeben werden und auch dort erhöhte Abnutzung und Geräuschentwicklung verursachen.

Die Erfindung sieht zur Lösung der Aufgabe bei einem Torsionsschwingungsdämpfer mit einem antriebsseitigen, mit einer Kurbelwelle verbundenen Primärelement und einem abtriebsseitigen Sekundärelement, welche zur Übertragung einer Drehbewegung koaxial drehbar und federelastisch miteinander gekoppelt sind, vor, dass das Primärelement in axialer Richtung spielfrei mit der Kurbelwelle mittelbar oder unmittelbar verbunden ist.

Durch die spielfreie Kopplung in axialer Richtung ist zunächst die Geräuschentwicklung und die Relativbewegung zwischen der Kurbelwelle, gegebenenfalls einer Schwungscheibe, einer Flexplatte und dem Primärelement des Torsionsschwingungsdämpfers, je nach dem welcher der genannten Teile in der Antriebskette vorgesehen sind, verhindert.

Da bei einer Antriebsbewegung der Kurbelwelle unausweichlich Bewegungen auch in Axialrichtung auftreten, nimmt die Erfindung in Kauf, dass diese im Bereich des Torsionsschwingungsdämpfers aufgenommen werden.

Es hat sich herausgestellt, dass dies überraschenderweise mit geringem konstruktivem Aufwand erreichbar ist. Die spielfreien Verbindungen können als feste oder vorteilhaft auch lösbare Fügeverbindungen ausgestaltet sein.

In dem Torsionsschwingungsdämpfer können die entsprechenden Bewegungen besonders einfach dadurch aufgefangen werden, dass das Primärelement in Axialrichtung gegenüber dem Sekundärelement verschiebbar ist.

Bei einer verbreiteten Konstruktion eines Torsionsschwingungsdämpfers, bei dem wie oben beschrieben das Primärelement oder das Sekundärelement mit einem hohlem Ring verbunden ist, in dem Federelemente zur Kopplung des Primärelements mit dem Sekundärelement geführt sind, ist üblicherweise vorgesehen, dass der Ring wenigstens eine Öffnung zum Eingriff des jeweils anderen der Elemente aufweist. Die Erfindung sieht nun vor, dass diese Öffnung sowie die gesamte Konstruktion in Axialrichtung eine Bewegung des anderen Elementes zum Ausgleich einer entsprechenden axialen Relativbewegung erlaubt.

Die Erfindung sieht außerdem vor, dass das Primärelement mittelbar oder unmittelbar in Axialrichtung an einem drehbaren, mit dem Sekundärelement verbundenen Teil gelagert ist und dass das Spiel des drehbaren Teils in Axialrichtung größer ist als das axiale Spiel der Kurbelwelle und des Primärelementes.

Dieses drehbare Teil kann beispielsweise ein Teil einer abtriebsseitig mit dem Sekundärteil verbundenen Kupplung sein. Hierdurch wird das axiale Spiel in dem Antriebsstrang zwischen dem Motor, der Kurbelwelle und dem Torsionsschwingungsdämpfer effektiv begrenzt. Durch die Lagerung der einzelnen Teile in axialer Richtung gegeneinander werden auch Klappergeräusche verringert und die Abnutzung durch axiales Schlagen verhindert.

Die Erfindung sieht weiterhin vorteilhaft vor, dass das Primärelement mit einer mit der Kurbelwelle axial spielfrei verbundenen Schwungscheibe verbunden ist. Die Schwungscheibe unterstützt den angestrebten Effekt durch Dämpfung unregelmäßiger Bewegungen vor allem in Umfangsrichtung, jedoch auch in Axialrichtung allein durch ihre Masse.

Diese Wirkung kann noch verstärkt werden durch Zwischenschaltung einer mit der Schwungscheibe verbundenen Flexplatte. Derartige Flexplatten sind an sich üblich und stellen eine taumelweiche Scheibe dar, die im Antriebsstrang angeordnet ist und die ebenfalls Schwingungen abdämpfen und Radial- beziehungsweise Axialversätze sowie Verkippungen von Drehachsen gegeneinander ausgleichen kann.

Zusätzlich kann das Primärteil mittelbar oder unmittelbar radial gelagert sein.

Hierdurch wird eine exaktere Anbindung an das Sekundärteil erreicht und die höhere Abnutzung beziehungsweise Geräuschentwicklung durch Unwuchten verringert. Die radiale Lagerung des Primärteils kann beispielsweise durch ein in Axialrichtung als Loslager wirkendes Lager im Bereich des Primärteils verwirklicht sein, das als Wälz- oder Gleitlager ausgebildet sein kann.

Die Radiallagerung kann beispielsweise an einer Getriebewelle oder an einem Getriebegehäuse/Kupplungsgehäuse erfolgen.

Um Fertigungstoleranzen möglichst auszugleichen, kann vorteilhaft vorgesehen sein, dass die Fügeverbindung zwischen dem Primärelement und der Schwungscheibe Mittel zum Ausgleich der Toleranzen bei der Montage aufweist.

Die Mittel zum Ausgleich der Toleranzen können beispielsweise durch Schraubverbindungen in radialer oder axialer Richtung mit entsprechend vorgesehenen Langlöchern gebildet sein.

So kann bei der Montage zunächst der Antriebsstrang mit möglichst minimierten Unwuchten zusammengefügt werden, was zusätzlich zu den bereits genannten Maßnahmen zu einer Erhöhung des Gleichlaufs sowohl in axialer als auch in Umfangsrichtung führt.

Entsprechende Mittel zum Toleranzausgleich können auch zwischen dem Primärelement und der Flexplatte oder zwischen der Flexplatte und der Schwungscheibe vorgesehen sein.

Die Erfindung sieht außerdem vorteilhaft eine Einrichtung zum Aufnehmen bzw. Kompensieren der radialen Kräfte vor, welche Bestandteil des Sekundärelements des Torsionsschwingungsdämpfers ist. Eine derartige Kompensationseinrichtung oder Kraftaufnahmeeinrichtung verhindert, dass die parasitär auftretenden radialen Kräfte an nachgeschaltete Komponenten, insbesondere z.B. an eine nachgeschaltete Kupplung, weitergegeben werden.

Eine Kompensationseinrichtung oder Kraftaufnahmeeinrichtung der erfindungsgemäßen Art lässt sich beispielsweise dadurch realisieren, dass das Sekundärelement selbst drehbar gelagert ist. Dies bedeutet, dass die Lagerung nicht unter Vermittlung von Bestandteilen nachgeschalteter, insbesondere vermittels des Torsionsschwingungsdämpfers angetriebener, Komponenten erfolgt. Geht man also z.B. von einer Kombination eines Torsionsschwingungsdämpfers und einer Kupplung, z.B. einer Doppelkupplung, aus, so ist erfindungsgemäß vorgesehen, dass nicht (nur) die Kupplung oder Teile der Kupplung entsprechend gelagert sind, sondern dass die Sekundärseite des Torsionsschwingungsdämpfers vorzugsweise im Momentenübergabebereich zwischen Torsionsschwingungsdämpfer und Kupplung lagernd abgestützt ist. In der Fachsprache kann dieses Lager auch als Ablagerung der Sekundärseite des Torsionsschwingungsdämpfers bezeichnet werden. Die in der Sekundärseite des Dämpfers auftretenden Kräfte aufgrund von Unwuchten oder dergleichen werden auf diese Weise innerhalb des Drehschwingungsdämpfers aufgefangen. Das zusätzlich vorhandene Lager ist quasi in die Konstruktion aus Dämpfer und Kupplung integriert.

Ein weiterer Vorteil der Ablagerung der Sekundärseite des Dämpfers an oder vor der Momentenübergabestelle zur nachgeschalteten Kupplung besteht darin, dass das Kupplungsgesamtspiel unabhängig von der Spieleinstellung am Torsionsschwingungsdämpfer eingestellt werden kann. Dies führt wiederum dazu, dass Dämpferkonstruktionen verwendet werden können, welche vollständig auf eine Spieleinstellung verzichten bzw. deren Primärseite als Flexelement die Kupplungsdämpfereinheit unabhängig von Axialbewegungen der Antriebswelle, insbesondere z.B. einer Kurbelwelle, macht.

Als besonders vorteilhaft hat es sich herausgestellt, wenn das Sekundärelement radial gelagert ist. Rein radiale Kräfte werden auf diese Weise sicher von den nachfolgenden Komponenten abgeschirmt. Axiale Versätze oder ein axiales Spiel führt nicht zwangsläufig zu einem erhöhten Verschleiß. Ein derartiges axiales Spiel ist unter Umständen sogar erwünscht. Axiale Versätze oder ein axiales Spiel werden von einer radialen Lagerung, insbesondere von einem Radiallager, nicht aufgenommen.

Eine besonders vorteilhafte Ausführungsvariante der Erfindung besteht darin, dass das Sekundärelement ein der Abtriebsseite zugewandtes Sekundärteilelement umfasst und dass das der Abtriebsseite zugewandte Sekundärteilelement drehbar, insbesondere radial, gelagert ist. Eine Kopplung zwischen dem der Abtriebsseite zugewandten Sekundärteilelement und der nachgeschalteten Komponente, z.B. der nachgeschalteten Kupplung, ermöglicht eine Abfederung/Kompensation von vom Torsionsschwingungsdämpfer kommenden radialen Kräften unmittelbar an der Momentenübergabestelle. Eine Schädigung der nachgeschalteten Komponenten, insbesondere der Kupplung, wird auf diese Weise effizient verhindert.

Alternativ oder zusätzlich zu dieser eben beschriebenen Variante sieht die Erfindung vor, dass das Sekundärelement ein der Antriebsseite zugewandtes Sekundärteilelement umfasst und dass das der Antriebsseite zugewandte Sekundärteilelement drehbar, insbesondere radial, gelagert ist. Die Alternativvariante kann aus Platzgründen vorteilhaft sein, die Zusatzvariante garantiert eine noch wirkungsvollere Abschirmung radialer Kräfte auf nachgeschaltete Bauelemente, insbesondere eine nachgeschaltete (Doppel-) Kupplung.

Es sind Lagerkonzepte unterschiedlichster Art denkbar. In einer besonders vorteilhaften Ausgestaltung der Erfindung ist vorgesehen, dass das Sekundärelement, insbesondere das der Abtriebsseite zugewandte Sekundärteilelement und/oder das der Antriebsseite zugewandte Sekundärteilelement, mittelbar oder unmittelbar auf einer Welle drehbar, insbesondere radial, gelagert ist. Diese Art der Lagerung zeichnet sich dadurch aus, dass durch die koaxiale Positionierung sehr kleine Unwuchten erzielt werden können. Außerdem kann bei einer mittelbaren Lagerung über die Nabe des Innenlamellenträgers der radial äußeren Kupplung die Montierbarkeit des Kupplungsmoduls erleichtert werden.

In einer weiteren Ausführungsvariante ist alternativ oder zusätzlich vorgesehen, das Sekundärelement, insbesondere das der Abtriebsseite zugewandte Sekundärteilelement und/oder das der Antriebsseite zugewandte Sekundärteilelement, mittelbar oder unmittelbar auf einem, vorzugsweise nicht drehenden, den Torsionsschwingungsdämpfer tragenden Träger drehbar, insbesondere radial, zu lagern. Diese Art der Lagerung zeichnet sich dadurch aus, dass die Radialkräfte mittelbar oder unmittelbar vom Träger aufgenommen werden können.

Als Beispiel einer Lagerung des Sekundärelements auf einer Welle kommt die Lagerung auf einer Getriebeeingangswelle in Betracht, welche von dem Torsionsschwingungsdämpfer angetrieben wird. Selbstverständlich kann man sich auch vorstellen, das Sekundärelement auf einer den Torsionsschwingungsdämpfer selbst antreibenden Antriebswelle zu lagern. Schließlich wäre es auch möglich, den Torsionsschwingungsdämpfer auf einer den Torsionsschwingungsdämpfer zwar axial durchsetzenden Welle zu lagern, welche jedoch den Torsionsschwingungsdämpfer weder mittelbar noch unmittelbar antreibt und welche auch von dem Torsionsschwingungsdämpfer weder mittelbar noch unmittelbar angetrieben wird. Die Vorteile für die Lagerung auf den vorstehend angegebenen Wellen bestehen darin, dass durch die Ausrichtung der Sekundärseite auf die antreibenden oder angetriebenen Wellen geringe Exzentrizitäten und damit Unwuchten realisiert werden können.

Anstelle einer unmittelbaren Lagerung auf einer Welle kommt auch die Lagerung des Sekundärelements unter Vermittlung einer der vorstehend angegebenen Wellen in Betracht. Als Ausführungsvariante sieht die Erfindung z.B. vor, dass das Sekundärelement, insbesondere das der Abtriebsseite zugewandte Sekundärteilelement und/oder das der Antriebsseite zugewandte Sekundärteilelement, mittelbar oder unmittelbar auf einer Primärnabe des Primärelements drehbar, insbesondere radial, gelagert ist. Diese Variante zeichnet sich dadurch aus, dass durch die Ausrichtung der sekundärseitigen Teile auf die primärseitigen Teile die sekundärseitige und primärseitige Drehachse identisch ist und damit eine Schädigung der Dämpferkomponenten durch Verschleiß effizientest verhindert wird.

Als weitere Alternative sieht die Erfindung vor, das Sekundärelement, insbesondere das der Abtriebsseite zugewandte Sekundärteilelement und/oder das der Antriebsseite zugewandte Sekundärteilelement, mittelbar oder unmittelbar auf einer Kupplungsnabe einer über den Torsionsschwingungsdämpfer mittelbar oder unmittelbar antreibbaren Kupplung, insbesondere Doppelkupplung, drehbar, insbesondere radial, zu lagern. Vorteilhaft bei dieser Art von Lagerung ist, dass eine axial kurze Bauform realisiert werden kann.

Eine Alternativlagerung besteht darin, das Sekundärelement, insbesondere das der Abtriebsseite zugewandte Sekundärteilelement und/oder das der Antriebsseite zugewandte Sekundärteilelement, mittelbar oder unmittelbar auf einer Lamellenträgernabe eines Lamellenträgers einer über den Torsionsschwingungsdämpfer mittelbar oder unmittelbar antreibbaren Kupplung, insbesondere Doppelkupplung, drehbar, vorzugsweise radial, zu lagern. Ein Vorteil dieser Art von Lagerung besteht darin, dass durch die koaxiale Positionierung sehr kleine Unwuchten erzielt werden können. Außerdem kann bei einer mittelbaren Lagerung über die Nabe des Innenlamellenträgers der radial äußeren Kupplung die Montierbarkeit des Kupplungsmoduls erleichtert werden.

Neben einer radialen Lagerung des Sekundärelements sieht die Erfindung auch als Alternative oder zusätzlich vor, das Sekundärelement, insbesondere das der Abtriebsseite zugewandte Sekundärteilelement und/oder das der Antriebsseite zugewandte Sekundärteilelement, axial zu lagern. Bei entsprechender Abstützung können axiale Kräfte aufgenommen werden, welche ursächlich auf radiale Versätze oder Unwuchten zurückzuführen sind. Bis zu einem gewissen Grad lassen sich durch eine derartige Lagerung vorzeitige Verschleißerscheinungen des Dämpfers und nachgeschalteter Komponenten mildern. Darüber hinaus ermöglicht eine derartige Lagerung eine axiale Positionierung der von dem Dämpfer angetriebenen Komponenten, z.B. einer Kupplung, in Bezug auf den Dämpfer.

Eine axiale Lagerung lässt sich zumindest einseitig sehr einfach dadurch bewerkstelligen, dass das Sekundärelement, insbesondere das der Abtriebsseite zugewandte Sekundärteilelement und/oder das der Antriebsseite zugewandte Sekundärteilelement, an dem Primärelement axial gelagert ist.

In Verbindung mit einer Kupplung ist es günstig, wenn das Sekundärelement, insbesondere das der Abtriebsseite zugewandte Sekundärteilelement und/oder das der Antriebsseite zugewandte Sekundärteilelement, wenigstens einseitig an einem Lamellenträger der Kupplung axial gelagert ist. Diese Variante zeichnet sich dadurch aus, dass eine besonders kompakte Bauweise möglich ist.

Während es grundsätzlich möglich ist, das Sekundärelement des Torsionsschwingungsdämpfers bei der eben beschriebenen Variante andersseitig z.B. am Primärelement zu lagern, hat es sich für manche Anwendungsfälle als günstig erwiesen, das Sekundärelement, insbesondere das der Abtriebsseite zugewandte Sekundärteilelement und/oder das der Antriebsseite zugewandte Sekundärteilelement, einseitig an einem ersten Lamellenträger der Kupplung und andersseitig an einem zweiten Lamellenträger der Kupplung axial zu lagern. Diese Ausführungsvariante zeichnet sich dadurch aus, dass auch axiale Kräfte effizient abgestützt werden können.

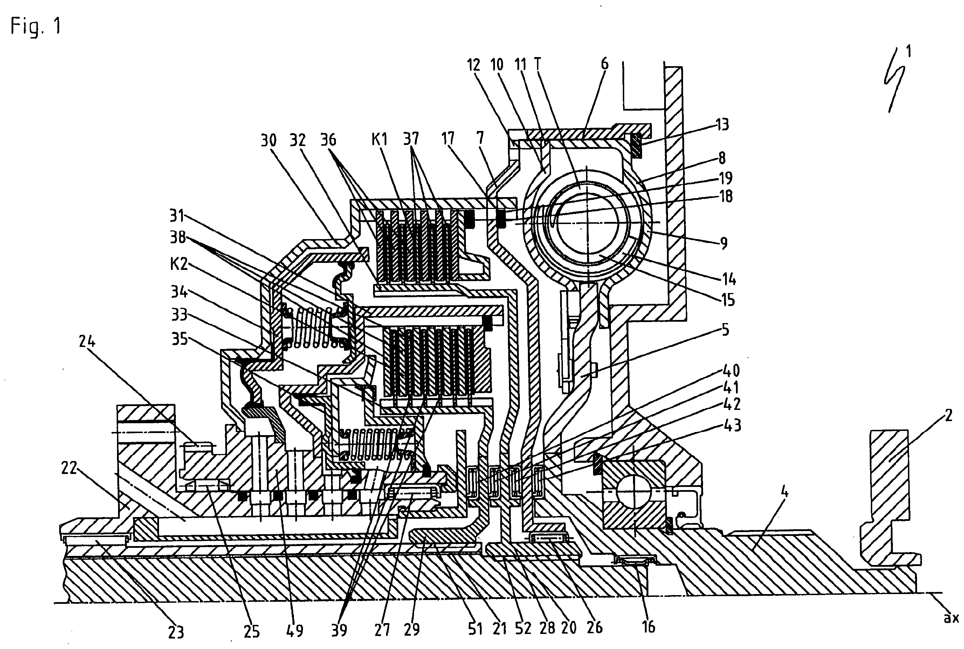

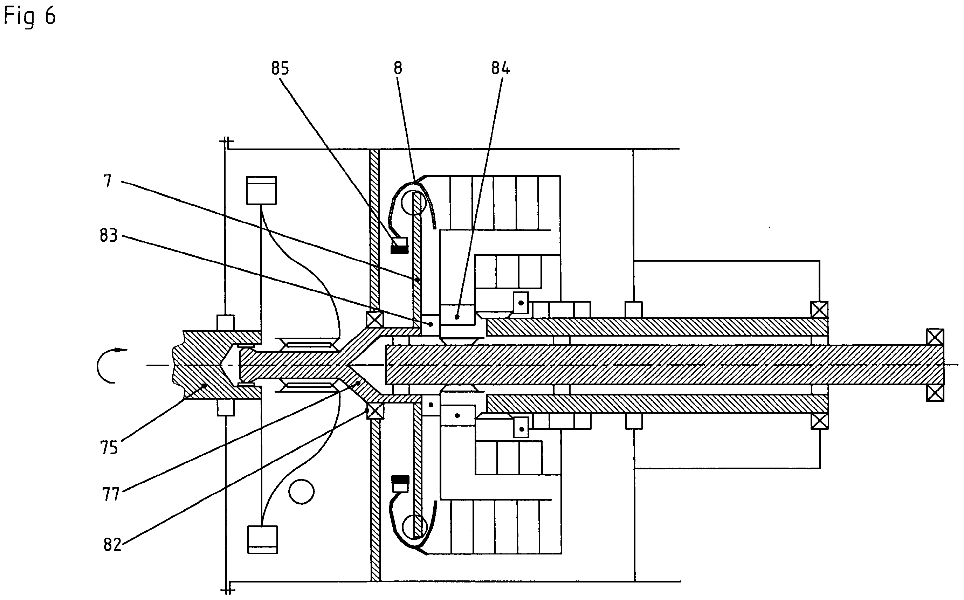

Die Erfindung wird nunmehr anhand der Zeichnungen näher beschrieben. Für gleiche oder funktionsgleiche Bestandteile werden in allen Figuren identische Bezugszeichen verwendet. Während die Fig. 1 bis 5, 7 und 8 lediglich dem besseren Verständnis der Erfindung dienen, zeigt Fig. 6 eine Kombination der erfindungsgemäßen Art. Es zeigen:
- Figur 1:: Ein erstes Ausführungsbeispiel einer Kombination aus einem Torsionsschwingungsdämpfer und einer Doppelkupplung im Axialhalbschnitt,
- Figur 2:: ein zweites Ausführungsbeispiel einer Kombination aus einem Torsionsschwingungsdämpfer und einer Doppelkupplung im Axialhalbschnitt,
- Figur 3:: ein drittes Ausführungsbeispiel einer Kombination aus einem Torsionsschwingungsdämpfer und einer Doppelkupplung im Axialhalbschnitt,
- Figur 4:: ein viertes Ausführungsbeispiel einer Kombination aus einem Torsionsschwingungsdämpfer und einer Doppelkupplung im Axialhalbschnitt,
- Figur 5:: einen schematischen Längsschnitt durch einen an eine Kurbelwelle angekoppelten Torsionsschwingungsdämpfer mit einer Doppelkupplung,
- Figur 6:: einen schematischen Längsschnitt durch einen an eine Kurbelwelle angekoppelten Torsionsschwingungsdämpfer der erfindungsgemäßen Art ähnlich dem in Figur 5 gezeigten mit einer unterschiedlichen Lagerung,
- Figur 7:: eine weniger schematisierte Darstellung eines Längsschnitt mit einem Torsionsschwingungsdämpfer,
- Figur 8:: einen ähnlichen Längsschnitt wie Figur 7 mit einer unterschiedlichen Lagerung,
- Figur 9:: eine sehr schematisierte Darstellung eines Torsionsschwingungsdämpfers mit einer Doppelkupplung mit schematischer Darstellung von Axiallagerstellen.

Die Figur 1 zeigt ein erstes Ausführungsbeispiel einer Kombination 1 aus einem Torsionsschwingungsdämpfer T und einer Doppelkupplung K1, K2 in radial umgreifender Bauweise im Axialhalbschnitt. Diese Kombination aus Torsionsschwindungsdämpfer T und Doppelkupplung mit den beiden geschachtelt angeordneten Einzelkupplungen K1, K2 wird der Einfachheit halber nachfolgend als Doppelkupplungseinrichtung bezeichnet.

Der Torsionsschwingungsdämpfer gemäß dieser Zeichnungsfigur 1 ist grundsätzlich in an sich üblicher Art und Weise ausgebildet. Er umfasst ein Primärelement 5 in der Art einer Scheibe sowie ein Sekundärelement 6 mit im vorliegenden Ausführungsbeispiel 3 Halbschalen 7, 8, 9, 10, welche miteinander drehfest verbunden sind. Primär- und Sekundärelemente 5, 6 sind über eine Federeinrichtung miteinander gekoppelt und um eine Neutralposition gegeneinander verdrehbar. Die Federeinrichtung besteht im vorliegenden Ausführungsbeispiel aus einer Mehrzahl in Umfangsrichtung hintereinander angeordneter Schraubenfedern 14, 15, welche mit Hilfe von sogenannten hier nichtdargestellten Gleitschuhen voneinander beabstandet sind. Es sind Schraubenfedern 14, 15 mit unterschiedlichem Federdurchmesser vorhanden. Ein Satz Schraubenfedern mit großem Durchmesser ist in dem Ausführungsbeispiel mit dem Bezugszeichen 14 versehen, ein Satz Schraubenfedern mit kleinem Durchmesser ist in der Zeichnungsfigur mit dem Bezugszeichen 15 gekennzeichnet. Jeweils eine Schraubenfeder 14 mit großem Durchmesser ist von einer Schraubenfeder 15 mit kleinem Durchmesser zentral durchsetzt. Jeweils ein Federnpaar aus äußerer Schraubenfeder 14 und innerer Schraubenfeder 15 schließt endseitig jeweils an einen der hier nicht dargestellten Gleitschuhe oder Endschuhe an.

Primär- und Sekundärelemente 5, 6 umfassen jeweils in diametraler Anordnung zwei Mitnehmer, welche jeweils zwischen die in Umfangsrichtung verlaufende aus Schraubenfedern 14, 15 bestehende Kette eingreifen, so dass ein antriebsseitig am Primärelement 5 anliegendes Drehmoment mittels eines in der Figur 1 nicht dargestellten Primärmitnehmers zunächst auf die Federkette aus Schraubenfedern 14, 15 und von dort auf einen ebenfalls nicht dargestellten Sekundärmitnehmer des Sekundärelements 6 übertragen werden kann.

Wie oben bereits erwähnt, umfasst das Sekundärelement 6 drei Einzelteile, nämlich eine antriebsseitige Halbschale 9, eine abtriebsseitige Halbschale 10 sowie eine weitere nachfolgend als abtriebsseitiges Sekundärteilelement 7 bezeichnete Halbschale 7. Die beiden erstgenannten Halbschalen, nämlich die antriebsseitige Halbschale 9 und die abtriebsseitige Halbschale 10 sind derart ausgebildet, dass sie die Kette aus Schraubenfedern 14, 15 im Wesentlichen formschlüssig aufnehmen. Beide Halbschalen 9, 10 sind über eine Verzahnung 11 drehfest miteinander verbunden. Diese beiden Halbschalen 9, 10 dienen zur vorzugsweise reibungsarmen Führung der Federn 14, 15 bzw. der zwischen den Federpaaren 14, 15 in Umfangsrichtung angeordneten Gleitschuhe und Endschuhe.

Im vorliegenden Ausführungsbeispiel ist neben diesen beiden die Federn 14, 15 aufnehmenden Halbschalen 9, 10 eine weitere Halbschale 7 auf der Abtriebsseite des Torsionsschwingungsdämpfers T vorgesehen. Diese Halbschale 7 stellt ein Koppelelement für die dem Torsionsschwingungsdämpfer T nachgeschaltete Komponenten, also im vorliegenden Fall für die Doppelkupplung K1, K2, dar. Die Halbschale 7 ist ähnlich der Halbschale 10 über eine Verzahnung 12 mit der antriebsseitigen Halbschale 9 drehfest verbunden. Sie übergreift die Halbschale 9 im radial äußeren Bereich. Mit Hilfe eines Sicherungsrings 13 und einer hier nichtdargestellten Feder zwischen den beiden Halbschalen 7, 10 erfolgt eine axial federnde Fixierung und Verbindung der drei das Sekundärelement 6 bildenden Halbschalen 7, 9, 10.

Auch die Doppelkupplung in radial geschachtelter Anordnung ist in an sich üblicher Weise aufgebaut. Sie umfasst eine radial äußere Kupplung K1 und eine radial innere Kupplung K2.

Die radial äußere Kupplung K1 umfasst einen Außenlamellenträger 30 sowie einen Innenlamellenträger 32. Beide Lamellenträger 30, 32 sind in der Art von Halbschalen ausgebildet. Der zylindrische Teil des Außenlamellenträgers 30 weist am Innenumfang eine Verzahnung auf. In diese Verzahnung greift jeweils eine entsprechende Außenverzahnung im vorliegenden Ausführungsbeispiel als Stahllamellen ausgeführter Außenlamellen 36 ein. In korrespondierender Weise weist der zylindrische Teil des Innenlamellenträgers 32 an dessen Außenumfang eine Verzahnung auf, in welche eine entsprechende Innenverzahnung hier als Belaglamellen ausgeführter Innenlamellen 37 eingreift. Außenlamellen 36 und Innenlamellen 37 sind derart zwischen die zylindrischen Bereiche der Außen- bzw. Innenlamellenträger 30, 32 eingeführt, dass in Achsrichtung jeweils auf eine Außenlamelle 36 eine Innenlamelle 37 folgt und umgekehrt. Die Außen- und Innenlamellen 36, 37 sind mittels eines Betätigungskolbens 34 in Reibeingriff und außer Reibeingriff verbringbar.

Auch die radial innere Kupplung K2 ist in an sich gleicher Weise wie die radial äußere Lamellenkupplung K1 ausgeführt. Auch hier ist ein halbschalenförmiger Außenlamellenträger 31 und ein halbschalenförmiger Innenlamellenträger 33 vorgesehen. Der zylindrische Teil des Außenlamellenträgers 31 weist innenumfangsseitig eine Verzahnung auf, in welche eine Außenverzahnung entsprechender als Stahllamellen ausgeführter Außenlamellen 38 eingreifen. Korrespondierend hierzu weist der zylindrische Abschnitt der Innenlamellenträgerhalbschale 33 eine Außenverzahnung auf, welche die Innenverzahnungen entsprechender Innenlamellen 39 aufnehmen kann. Jeweils eine Innenlamelle 39 ist benachbart zu zwei Außenlamellen 38 und jeweils eine Außenlamelle 38 ist benachbart zu einer Innenlamelle 39 ein Lamellenpaket bildend angeordnet. Die Außen- und Innenlamellen 38, 39 können mit Hilfe eines Betätigungskolbens 35 in Reibeingriff und außer Reibeingriff verbracht werden.

Die Lamellenpakete der radial äußeren Kupplung K1 und der radial inneren Kupplung K2 sind zueinander in radial geschachtelter Weise angeordnet. Dies bedeutet, dass sich das Lamellenpaket der radial inneren Kupplung K2 radial innerhalb des Lamellenpakets der radial äußeren Kupplung K1 und in etwa im gleichen axialen Abschnitt befindet.

Die beiden Außenlamellenträger 30, 31 der radial äußeren Kupplung K1 und der radial inneren Kupplung K2 sind über eine Kupplungsnabe 49 drehfest miteinander verbunden. Diese Kupplungsnabe 49, welche im Wesentlichen die Form eines Zylinders aufweist, ist am Außenumfang eines feststehenden und in der Fachsprache im Allgemeinen als Kupplungssupport 22 bezeichneten Trägers drehbar gelagert. Die drehbare Lagerung erfolgt über zwei Radialnadellager 25, 27. Dieser stehende Support 22 ist ebenfalls im Wesentlichen hohlzylindrisch ausgebildet. Er wird von zwei sich koaxial durchsetzenden Getriebeeingangswellen durchsetzt, welche in der Figur 1 zwar nicht gezeichnet sind, deren Position jedoch durch die beiden Bezugszeichen 20 und 21 gekennzeichnet sind.

Auf der inneren Getriebeeingangswelle 20, einer Vollwelle, ist das Primärelement 5 des Torsionsschwingungsdämpfers T über einen entsprechenden Primärflansch 4 drehbar gelagert, welcher seinerseits axial spielfrei mit der Kurbelwelle 2 verbunden ist. Die Lagerung wird im vorliegenden Ausführungsbeispiel mit Hilfe eines Radialnadellagers 16 realisiert.

Die beiden Getriebeeingangswellen, nämlich die Hohlwelle 21 und die Vollwelle 20, sind drehfest jeweils mit einem der Innenlamellenträger 32, 33 einer der beiden Kupplungen K1, K2 verbunden. Zu diesem Zweck weisen die Innenlamellenträger 32, 33 entsprechende Naben 28, 29 auf, welche am Innenumfang jeweils eine Steckverzahnung 51, 52 zur Aufnahme entsprechender Verzahnungen der Getriebeeingangswellen 20, 21 aufweisen.

Der Außenlamellenträger 30 der radial äußeren Kupplung K1 stellt nunmehr die Eingangsseite der Doppelkupplung dar. Die beiden Innenlamellenträger 32, 33 der Kupplungen K1, K2 bilden die Ausgangsseiten der Doppelkupplung. Ein über den Außenlamellenträger 30 eingeleitetes Drehmoment kann demzufolge wahlweise je nach Stellung der beiden Betätigungskolben 34, 35 auf eine der beiden Innenlamellenträger 32, 33 und von dort weiter über die entsprechenden Naben 28, 29 auf die Getriebeeingangswellen 20, 21 übertragen werden.

Aus dem Stand der Technik ist es bekannt, das abtriebsseitige Sekundärteilelement 7 und den Außenlamellenträger 30 der äußeren Kupplung K1 an dem durch das Bezugszeichen 17 gekennzeichneten Ort mit Hilfe einer Schweißnaht zu verbinden. Eine andere Ausführung besteht darin, den Außenlamellenträger 30 und das abtriebsseitige Sekundärteilelement 7 einstückig auszuführen. In beiden Fällen fehlt der radial innerhalb des durch das Bezugszeichen 17 gekennzeichneten Orts liegende Blechteil des Sekundärteilelements 7. Ein von einem Verbrennungsmotor erzeugtes und über eine Kurbelwelle 2 auf den Drehschwingungsdämpfer T übertragenes Drehmoment kann damit durch den Torsionsschwingungsdämpfer T gedämpft wahlweise auf eine der beiden Getriebeeingangswellen 20, 21 übertragen werden.

Es hat sich nunmehr bei der eben beschriebenen Ausführungsvarianten gemäß dem Stand der Technik gezeigt, dass vor allem die in der Sekundärseite des Dämpfers T auf Grund von Unwuchten auftretenden Kräfte nicht innerhalb des Dämpfers T aufgefangen werden können. Die Erfindung setzt nunmehr bei dieser Problematik an:
Das abtriebsseitige Sekundärteilelement 7 ist bei dieser Ausführungsvariante gemäß der Figur 1 nicht lediglich als schmaler Ring mit vergleichsweise geringen radialen Abmessungen ausgeführt, sondern das Sekundärteilelement 7 erstreckt sich bis nahe an den Außenradius der Nabe 28. In diesem radial inneren Bereich weist das abtriebsseitige Sekundärteilelement 7 eine zylindrische Form auf. Zwischen dem Innenumfang dieses zylindrischen Abschnitts des abtriebsseitigen Sekundärelements 7 und dem Außenumfang der Innenlamellenträgernabe 28 ist ein Radialnadellager 26 eingesetzt. Diese Lagerstelle stützt das abtriebsseitige Sekundärteilelement 7 radial ab und verhindert eine Übergabe radialer Kräfte auf den Außenlamellenträger 30 der radial äußeren Kupplung K1 der Doppelkupplung.

Um jegliche radiale Kräfte von der Doppelkupplung, insbesondere dem Außenlamellenträger 30 der radial äußeren Kupplung K1 fernzuhalten, besteht keine starre Verbindung zwischen dem Außenlamellenträger 30 der radial äußeren Kupplung K1 und dem abtriebsseitigen Sekundärteilelement 7. Vielmehr weist das offene Ende des Außenlamellenträgers 30 der radial äußeren Kupplung K1 eine Verzahnung auf, welche in eine entsprechende Verzahnung des abtriebsseitigen Sekundärteilelements 7 mit radialem Spiel eingreift.

Zwischen den abschnittsweise im Wesentlichen radial verlaufenden Innenlamellenträgern 32, 33 und dem abtriebsseitigen Sekundärteilelement 7 sind Axialnadellager 41, 42 vorgesehen, welche die Innenlamellenträger 31, 32 und das abtriebsseitige Sekundärteilelement 7 axial beabstanden. Zwischen dem abtriebsseitigen Sekundärteilelement 7 und dem Primärelement 5 befindet sich ein weiteres Axialnadellager 43. Ebenso ist ein Axialnadellager zwischen dem Innenlamellenträger 33 der radial inneren Kupplung K2 und einer drehfest mit dem Kupplungssupport 22 verbundenen Halbschale 53 vorgesehen. Diese Axialnadellager 40, 41, 42, 43 dienen zum einen zur reibungsarmen Führung der gegeneinander drehbeweglichen Halbschalen 33, 32, 7, 5 als auch zur Abstützung in axialer Richtung, wobei die Einstellung der axialen Spiels mit Hilfe eines Sicherungsrings 18 und einer Tellerfeder 19 an der Übergabestelle 17 des Drehmoments vom Torsionsschwingungsdämpfer T auf den Außenlamellenträger 30 der äußeren Kupplung K1 erfolgt.

Aus dem in der Figur 1 gezeigten Ausführungsbeispiel zeigt sich dass sich die Erfindung ohne weiteres durch die Verwendung vorhandener Blechteile, mit deren Hilfe das abtriebsseitige Sekundärteilelement 7 in Form eines zusätzlichen Deckels geformt wird, realisieren lässt. So kann von einem bestehenden Dämpfergehäuse, welches bisher auf großen Durchmesser ausgestanzt wurde und/oder mit dem Außenlamellenträger der äußeren Kupplung K1 verbunden wurde, der innere Bereich der Platine verwendet werden, um die notwendige Deckelform herzustellen. Durch geschickte Anordnung der Blechteile kann die erfindungsgemäße Lagerstelle nahezu bauraumneutral ausgeführt sein.

Des Weiteren ermöglicht die Erfindung die Einstellung des Kupplungsgesamtspiels unabhängig von der Dämpferspieleinstellung zu gestalten. Dies wiederum ermöglicht den Einbau von Dämpferkonstruktionen, die vollkommen auf eine Spieleinstellung verzichten bzw. deren Primärseite als Flexelement die Kupplungsdämpfereinheit unabhängig von Axialbewegungen der Kurbelwelle macht.

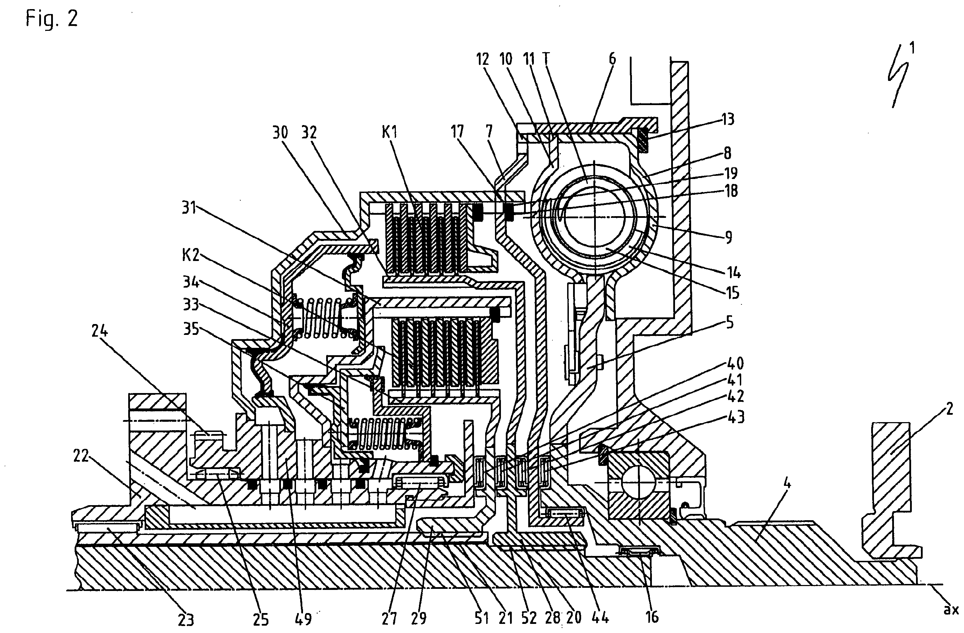

Die Figur 2 zeigt ein weiteres Ausführungsbeispiel einer erfindungsgemäßen Kombination 1 aus einem Torsionsschwingungsdämpfer T und einer Doppelkupplung K1, K2 in radial geschachtelter Anordnung im Axialhalbschnitt. Die gesamte Doppelkupplungseinrichtung 1 nach der Figur 2 ist nahezu identisch ausgeführt, wie die Kombination aus Torsionsschwingungsdämpfer T und Doppelkupplung K1, K2 gemäß der Figur 1. Was die übereinstimmenden Bestandteile betrifft, wird daher auf eine nochmalige Beschreibung verzichtet.

Die Ausführungsvariante gemäß der Figur 2 unterscheidet sich von der gemäß der Figur 1 lediglich dadurch, dass sich hier zwischen dem abtriebsseitigen Sekundärteilelement 7 und der Nabe 28 des Innenlamellenträgers 32 der radial äußeren Kupplung K1 kein Radialnadellager 26 befindet. Vielmehr ist anstelle dieses Radialnadellagers 26 ein Radialnadellager 44 zwischen dem Außenumfang des hohlzylindrisch ausgeführten radial inneren Endes des abtriebsseitigen Sekundärteilelements 7 und einem Innenumfang des Primärflansch 4 des Primärelements 5 angeordnet. Auch hier findet eine Aufnahme radialer, über den Torsionsschwingungsdämpfer T eingeleiteter radialer Kräfte statt.

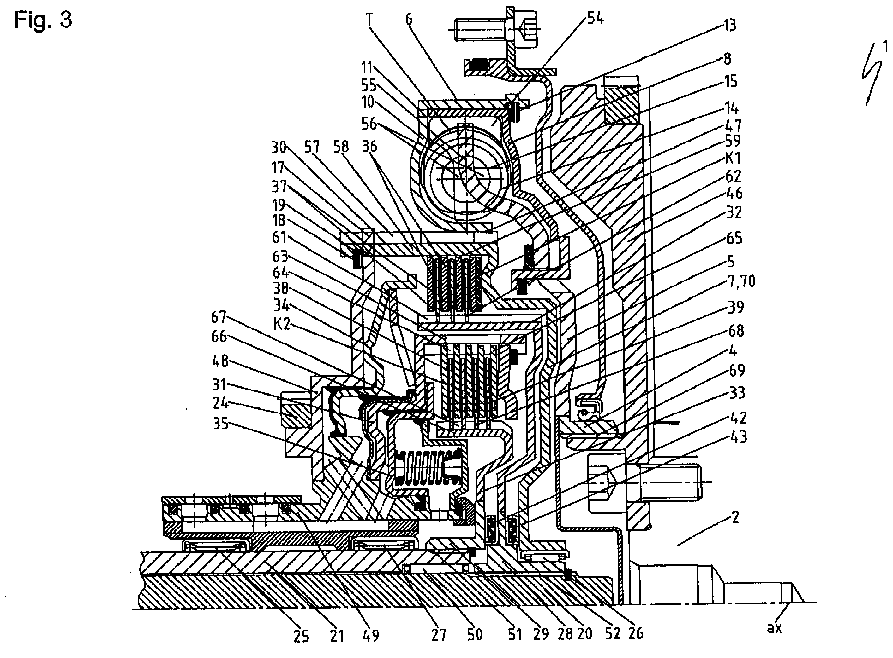

Die Figur 3 zeigt ein drittes Ausführungsbeispiel einer erfindungsgemäßen Kombination 1 aus einem Torsionsschwingungsdämpfer T und einer Doppelkupplung K1, K2 in radial geschachtelter Anordnung im Axialhalbschnitt. Auch der Torsionsschwingungsdämpfer T gemäß dieser Zeichnungsfigur 3 ist grundsätzlich in an sich üblicher Art und Weise ausgebildet. Er umfasst ein Primärelement 5 in der Art einer Scheibe sowie ein Sekundärelement 6 mit im vorliegenden Ausführungsbeispiel zwei Halbschalen 7, 8, welche miteinander drehfest verbunden sind. Primär- und Sekundärelemente 5, 6 sind über eine Federeinrichtung miteinander gekoppelt und um eine Neutralposition gegeneinander verdrehbar. Die Federeinrichtung besteht aus einer Mehrzahl in Umfangsrichtung hintereinander angeordneter Schraubenfedersätzen. Ein Schraubenfedersatz besteht aus jeweils einer Innenfeder 15 und einer diese umgreifenden Außenfeder 15. Benachbarte Schraubenfedersätze sind mit Hilfe von Gleitschuhen 54, welche in der Fachsprache auch als Federaufteiler bezeichnet werden, voneinander beabstandet.

Primär- und Sekundärelemente 5, 6 umfassen jeweils in diametraler Anordnung zwei Mitnehmer, welche jeweils zwischen die in Umfangsrichtung verlaufende Kette der Schraubenfedern 14, 15 eingesetzt sind, so dass ein antriebsseitig in das Primärelement 5 eingekoppeltes Drehmoment mittels jeweils eines in der Figur 1 dargestellten Primärmitnehmers 55 zunächst auf die aus den Schraubenfedern 14, 15 bestehende Federkette und von dort auf den jeweiligen korrespondierenden Sekundärmitnehmer 56 des Sekundärelements 6 übertragen wird.

Die beiden Halbschalen 7, 8, nämlich die antriebsseitige Halbschale 8 und die abtriebsseitige Halbschale 7 sind derart ausgebildet, dass sie die aus Schraubenfedern 14 bestehende Kette im Wesentlichen formschlüssig aufnehmen. Beide Halbschalen 9, 10 sind über eine Verzahnung 11 drehfest miteinander verbunden und mit Hilfe eines in eine Umfangsnut der abtriebsseitigen Halbschale 7 eingreifenden Sicherungsrings 13 gegeneinander axial im wesentlichen unverschieblich gesichert. Diese beiden Halbschalen 7, 8 dienen zur vorzugsweise reibungsarmen Führung der Federn 14, 15 bzw. der zwischen den Federn 14, 15 in Umfangsrichtung angeordneten Gleitschuhe 55.

Auch die Doppelkupplung in radial geschachtelter Anordnung selbst ist in an sich üblicher Weise aufgebaut. Sie umfasst zwei Kupplungen K1, K2, wobei das Lamellenpaket der einen Kupplung K2 radial innerhalb des Lamellenpakets der anderen Kupplung K1 angeordnet ist. Darüber hinaus sind beide Lamellenpakete in etwa im gleichen axialen Abschnitt angeordnet. Die Kupplung K1 mit dem radial äußeren Lamellenpaket wird nachfolgend als radial äußere Lamellenkupplung K1, die andere als radial innere Lamellenkupplung K2 bezeichnet.

Die radial äußere Kupplung K1 umfasst einen Außenlamellenträger 30 sowie einen Innenlamellenträger 32. Beide Lamellenträger 30, 32 sind in der Art von Halbschalen ausgebildet. Der zylindrische Teil 57 des Außenlamellenträgers 30 weist am Innenumfang eine Verzahnung 58 auf. In diese Verzahnung 58 greift jeweils in eine entsprechende Außenverzahnung 59 von im vorliegenden Ausführungsbeispiel als Stahllamellen ausgeführten Außenlamellen 36 ein. In korrespondierender Weise weist der zylindrische Teil 60 des Innenlamellenträgers 32 am Außenumfang eine Verzahnung 61 auf, in welche eine entsprechende Innenverzahnung 62 hier als Belaglamellen ausgeführter Innenlamellen 37 eingreift. Außenlamellen 36 und Innenlamellen 37 sind derart zwischen die zylindrischen Bereiche 57, 60 der Außen- bzw. Innenlamellenträger 30, 32 eingeführt, dass in axialer Richtung jeweils auf eine Außenlamelle 36 eine Innenlamelle 37 folgt und umgekehrt. Die Außen- und Innenlamellen 36, 37 sind mittels eines Betätigungskolbens 34 in Reibeingriff und außer Reibeingriff verbringbar.

Die radial innere Kupplung K2 ist prinzipiell in gleicher Weise wie die radial äußere Lamellenkupplung K1 ausgeführt. Auch hier ist ein halbschalenförmiger Außenlamellenträger 31 und ein halbschalenförmiger Innenlamellenträger 33 vorgesehen. Der zylindrische Teil 63 des halbschalenförmigen Außenlamellenträgers 31 weist innenumfangsseitig eine Verzahnung 64 auf, in welche eine Außenverzahnung 65 entsprechender als Stahllamellen ausgeführter Außenlamellen 38 eingreift. Korrespondierend hierzu weist der zylindrische Abschnitt 66 der Innenlamellenträgerhalbschale 33 eine Außenverzahnung 67 auf, welche die Innenverzahnungen 68 entsprechender Innenlamellen 39 aufnimmt. Eine Innenlamelle 39 ist hiermit benachbart zu zwei Außenlamellen 38, eine Außenlamelle 38 ist benachbart zu zwei Innenlamellen 39 ein Lamellenpaket bildend angeordnet. Die Außen- und Innenlamellen 38, 39 können mit Hilfe eines Betätigungskolbens 35 in Reibeingriff und außer Reibeingriff verbracht werden.

Der Außenlamellenträger 31 der radial inneren Kupplung K2 ist drehfest mit einer Kupplungsnabe 49 verbunden. Weiterhin besteht eine drehfeste Verbindung zwischen dem Außenlamellenträger 30 der radial äußeren Kupplung K1 und einer mit der Kupplungsnabe 49 verschweißten und ein Pumpenantriebszahnrad 24 tragenden Seitenscheibe 48 mit Hilfe einer Steckverzahnung 17. Die Kupplungsnabe 49, welche im Wesentlichen die Form eines Zylinders aufweist, ist um eine Drehachse ax am Außenumfang einer Getriebeeingangswelle 21 drehbar gelagert. Die drehbare Lagerung erfolgt über zwei Radialnadellager 25, 27.

Die Getriebeeingangswelle 21 ist in der Form eines Hohlzylinders ausgeführt. Sie ist von einer weiteren als Vollwelle ausgeführten Getriebeeingangswelle 22 zentral durchsetzt und auf dieser mittels eines Radialnadellagers 50 drehbar gelagert. Die Hohlwelle 21 ist über eine Steckverzahnung 51 mit einer Nabe 29 des Innenlamellenträgers 33 der radial inneren Kupplung K2 verbunden. Die Vollwelle 20 ist über eine Steckverzahnung 52 mit einer Nabe 28 des Innenlamellenträgers 32 der radial äußeren Lamellenkupplung K1 drehfest verbunden.

Die Kupplungsnabe 49 und der mit dieser drehfest verbundene Lamellenträger 30 der radial äußeren Kupplung K1 stellen nunmehr die Eingangsseite der Doppelkupplung dar. Der Innenlamellenträger 32 der radial äußeren Lamellenkupplung K1 und der Innenlamellenträger 33 der Kupplung K2 bilden die Ausgangsseiten der Doppelkupplung. Ein den Außenlamellenträger 30 über bzw. die Kupplungsnabe 49 eingeleitetes Drehmoment wird demzufolge wahlweise je nach Stellung der beiden Betätigungskolben 34, 35 über einen der beiden Innenlamellenträger 31 oder 33 auf eine der beiden Getriebeeingangswellen 20, 21 übertragen.

Die Eingangsseite der Doppelkupplung K1, K2 und die Ausgangsseite des Torsionsschwingungsdämpfers T sind über eine Schweißnaht 47 zwischen abtriebsseitigem Sekundärteilelement 7 und zylindrischem Teil 57 des Außenlamellenträgers 30 der radial äußeren Kupplung K1 starr miteinander verbunden. Weiter besteht eine drehfeste Verbindung zwischen einer Primärnabe 4 des Primärelements 5 und einer Eingangsschwungmasse 46 über eine Steckverzahnung 69. Die Eingangsschwungmasse 46 wiederum ist eingangsseitig mit einer Kurbelwelle 2 verbunden, welche von einem hier nicht dargestellten Verbrennungsmotor angetrieben werden kann.

Geht man nunmehr davon aus, dass von dem hier nicht dargestellten Verbrennungsmotor ein Drehmoment erzeugt wird, so wird dieses über die Kurbelwelle 2, die mit dieser axial spielfrei verbundene Eingangsschwungmasse 46 auf das Primärelement 5 des Torsionsschwingungsdämpfers T geleitet. Radialschwingungen werden von der Federeinrichtung 14, 15 gedämpft und das Drehmoment wird weiter auf das Sekundärelement 6 übertragen. Das Sekundärelement 6 überträgt das Drehmoment weiter auf den Außenlamellenträger 30 der radial äußeren Kupplung sowie über die Halbschale 48 und die Kupplungsnabe 49 auch auf den Außenlamellenträger 31 der radial inneren Lamellenkupplung K2. Je nach Stellung der Betätigungskolben 34, 35 erfolgt eine Weiterleitung des Drehmoments über einen der beiden Innenlamellenträger 31, 33 auf eine der beiden Getriebeeingangswellen 20, 21.

Wie oben bereits ausgeführt wurde, besteht grundsätzlich das Bedürfnis radiale Kräfte an dem Sekundärelement 6 des Torsionsschwingungsdämpfers T abzulagern. Dies erfolgt im vorliegenden Ausführungsbeispiel dadurch, dass der (ring-) scheibenförmige Teil 70 des Außenlamellenträgers 30 der radial äußeren Kupplung K1 quasi eine Verlängerung der abtriebsseitigen Halbschale 7 des Sekundärelements 7 nach radial innen bildet, am inneren Umfang zylindrisch verläuft und in diesem zylindrischen Innenumfangsbereich mittels eines Radialnadellagers 26 gegen den Außenumfang der Nabe 28 radial gelagert und abgestützt ist. Es wird keine radiale Kraft auf die übrigen Kupplungsbestandteile übertragen, weil durch die Verzahnung 17 zwischen Außenlamellenträger 30 und Seitenscheibe 48 eine gewisse radiale Bewegung zwischen diesen beiden Bauteilen 30, 48 möglich ist.
Das Kupplungsspiel wird über einen Sicherungsring 18 und eine Tellerfeder 19 am Außenrand der Doppelkupplung eingestellt. Die axiale Verschiebbarkeit wird radial innen durch zwei Axialnadellager 42, 43, welche zwischen dem Innenlamellenträger 33 der Innenkupplung K2, dem Innenlamellenträger 32 der radial äußeren Kupplung K1 und dem Außenlamellenträger 30 der radial äußeren Kupplung K1 angeordnet sind, festgelegt.

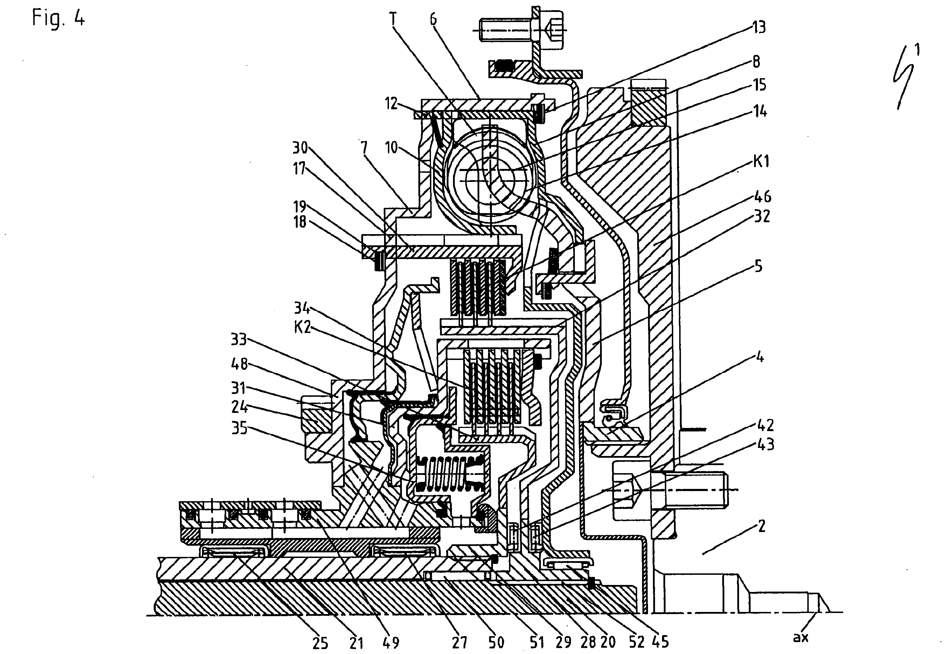

Die Figur 4 zeigt ein viertes Ausführungsbeispiel einer erfindungsgemäßen Kombination 1 aus Torsionsschwingungsdämpfer T und Doppelkupplung K1, K2. Diese Ausführungsvariante ist sehr ähnlich, wie die Kupplungseinrichtung nach der Figur 3 ausgeführt. Auf eine nochmalige Beschreibung übereinstimmender Bestandteile wird daher verzichtet.

Abweichend von der Ausführungsvariante nach der Figur 3 ist hier die Momentenübergabestelle vom Torsionsschwingungsdämpfer T auf die Doppelkupplung K1, K2 nicht an einer Schweißnaht 47 zwischen der abtriebsseitigen Halbschale 10 des Sekundärelements 6 und dem Außenlamellenträger 30, sondern an der Verzahnung 17. Zu diesem Zweck ist die Seitenscheibe 48 als weiteres abtriebsseitiges Sekundärteilelement ähnlich der zu den Figuren 1 und 2 beschriebenen Art ausgebildet.

Die radiale Ablagerung erfolgt bei diesem Ausführungsbeispiel nicht über eine zum Teil durch den Außenlamellenträger 30 gebildete abtriebsseitige Halbschale 10 des Sekundärelements 6, wie bei der Ausführungsvariante nach der Figur 3, sondern über die antriebsseitige Halbschale 8, welche zu diesem Zweck nach radial innen verlängert ausgebildet ist, in einen zylindrischen Abschnitt mündet und in diesem Bereich innenumfangsseitig an ein Radialnadellager 45 anschließt, welches auf dem Außenumfang der Nabe 28 des Innenlamellenträgers 32 der radial äußeren Kupplung sitzt.

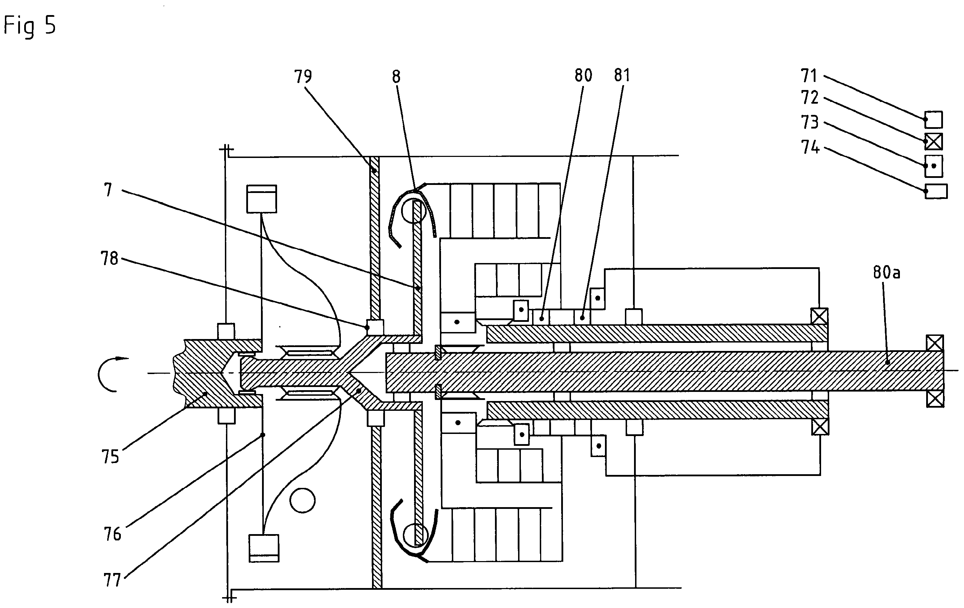

Figur 5 zeigt antriebsseitig einen Teil einer Kurbelwelle 75, die eine Schwungscheibe 76 trägt. Die Welle 77, die die Verlängerung der Kurbelwelle 75 bildet, ist radial in einem ersten Loslager 78 am Getriebedeckel 79 gelagert und andererseits an der Getriebewelle 80a.

Die Welle/der Primärflansch 77 trägt das Primärelement 7 des Torsionsschwingungsdämpfers. Die Welle 77 und das Primärteil 7 sind in axialer Richtung nicht gelagert, sondern unterliegen den Axialbewegungen, die von der Kurbelwelle aufgeprägt sind, an die sie axial spielfrei angekoppelt sind.

Zu diesem Zweck weist das Primärteil 7 innerhalb der Halbschalen, die Teile des Sekundärteils 8 bilden, ein axiales Spiel auf, so dass entsprechend Axialbewegungen der Kurbelwelle hier aufgenommen werden können.

Das Sekundärelement 8 des Torsionsschwingungsdämpfers ist seinerseits radial über die abtriebsseitige Kupplung beispielsweise in den Lagern 80, 81 gelagert.

In der Legende der Figur 5 ist gezeigt, dass verschiedene Arten von Lagern unterschiedlich dargestellt werden, und zwar ist mit 71 das Symbol für Loslager, das heißt nur radialführende Lager bezeichnet, mit 72 das Symbol für Festlager, die sowohl in radialer als auch axialer Richtung führen und mit 73 das Symbol für Axiallager, die nur für die Lagerung in axialer Richtung vorgesehen sind. Mit 74 ist das Symbol für Radialstützlager bezeichnet.

Bei der Konfiguration, die in der Figur 5 dargestellt ist, führen axiale Bewegungen der Kurbelwelle, wie sie bei Verbrennungsmotoren naturgemäß auftreten, jedenfalls nicht zu einer Übertragung solcher Bewegungen zur Kupplung.

Die einzelnen Abschnitte der Antriebskette, das heißt die Kurbelwelle 75, die Welle 77 und das Primärelement 7 des Torsionsschwingungsdämpfers sind in axialer Richtung beispielsweise durch Verschweißen, Aufschrumpfen oder Verschrauben spielfrei miteinander verbunden, so dass auch eine Relativbewegung dieser Teile gegeneinander vermieden ist und hierdurch keine Geräusche oder Unwuchten entstehen können.

Die radiale Lagerung der Welle 77 und damit des Primärelementes 7 des Torsionsschwingungsdämpfers im Lager 78 an dem Getriebedeckel 79 bewirkt zusätzlich einen präzisen Lauf der Antriebselemente in radialer Richtung und damit die Vermeidung entsprechender Unwuchten oder Unregelmäßigkeiten bei der Übertragung der Drehbewegung innerhalb des Torsionsschwingungsdämpfers.

Die Figur 6 zeigt zusätzlich und alternativ zu der Konstruktion, die in Figur 5 dargestellt ist, dass die Welle 77 in einem Festlager 82 gelagert ist und dass zusätzlich eine axiale Lagerung der Welle/des Primärflansches 77 in den Lagern 83, 84 gegenüber den Teilen der Kupplung stattfindet. Dabei ist für das Funktionieren der Erfindung wichtig, dass das Axialspiel der Lager 83, 84 größer ist als die zu erwartenden Axialbewegungen der Kurbelwelle 75. Entsprechende Bewegungen des Primärelementes 7 können dann durch das Axialspiel gegenüber dem Sekundärelement 8 in dem Torsionsschwingungsdämpfer noch aufgenommen werden.

Im Unterschied zu der Konstellation aus der Figur 5 ist das Sekundärelement 8 des Torsionsschwingungsdämpfers zusätzlich mittels eines Radiallagers 85 gegenüber dem Primärelement 7 abgestützt.

Auf diese Weise werden radiale Unwuchten zwischen dem Primärelement 7 und dem Sekundärelement 8 minimiert, die zur Geräuschentwicklung und zu übermäßiger Abnutzung sowie zu Bewegungsunwuchten führen könnten.

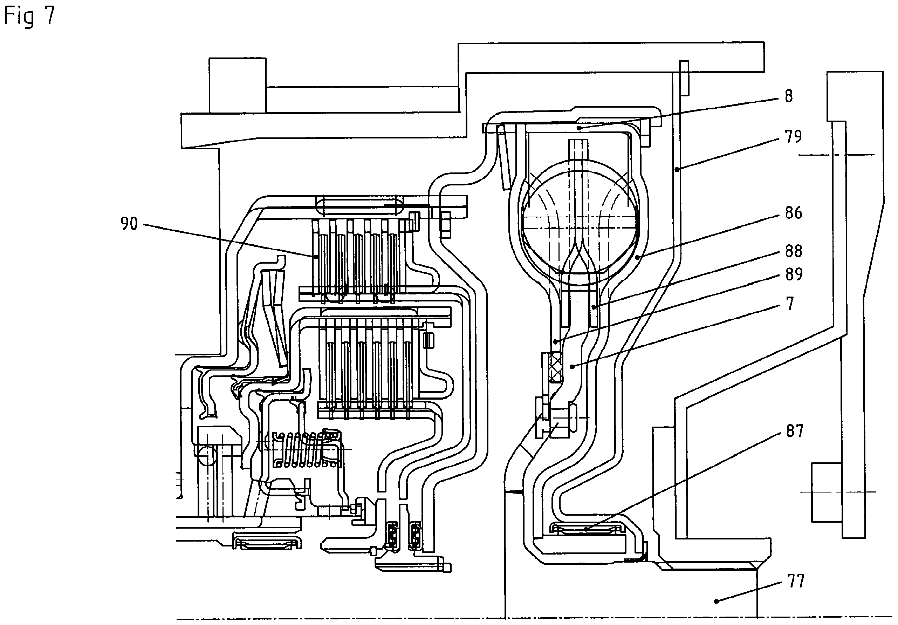

Figur 7 zeigt eine Lagerung des Sekundärelementes 8 über die antriebsseitige Halbschale 86 und deren radial nach innen führenden Fortsatz mit einer Radiallagerung 87 am Getriebedeckel 79.

In der Figur ist auch das axiale Spiel 88 zwischen dem Primärelement 7 und den Halbschalen 86, 89 des Sekundärelementes und die abtriebsseitige Kupplung 90 dargestellt.

Eine axiale Lagerung des Primärelementes 7 beziehungsweise der mit diesem verbundenen Teile der Antriebskette ist bei der in der Figur 7 dargestellten Konstruktion nicht vorgesehen.

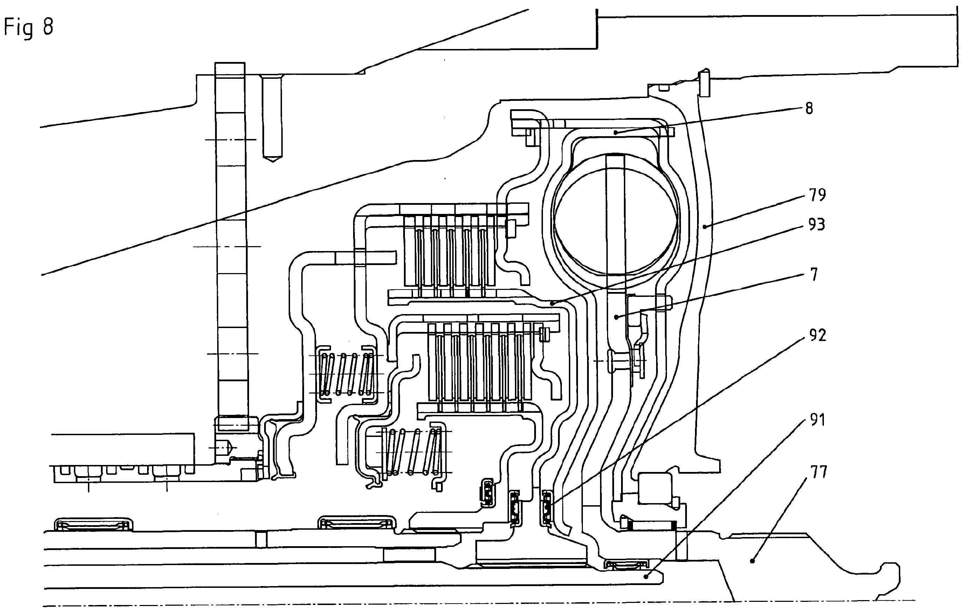

Figur 8 zeigt einen mit der Kurbelwelle verbundenen Teil einer Welle 77, an die das Primärteil 7 fest angefügt ist. Die Welle 77 ist gegenüber einer Getriebewelle 91 radial gelagert. Eine axiale Lagerung des Primärelementes 7 ist nicht vorgesehen.

In der Figur ist zusätzlich dargestellt, dass die antriebsseitige Halbschale des Sekundärelementes 8 gegenüber dem Getriebegehäuse, insbesondere dem Getriebedeckel 79 gelagert ist. Es ist zusätzlich eine axiale Lagerung 92 gegenüber einem Innenlamellenträger 93 der Kupplung vorgesehen.

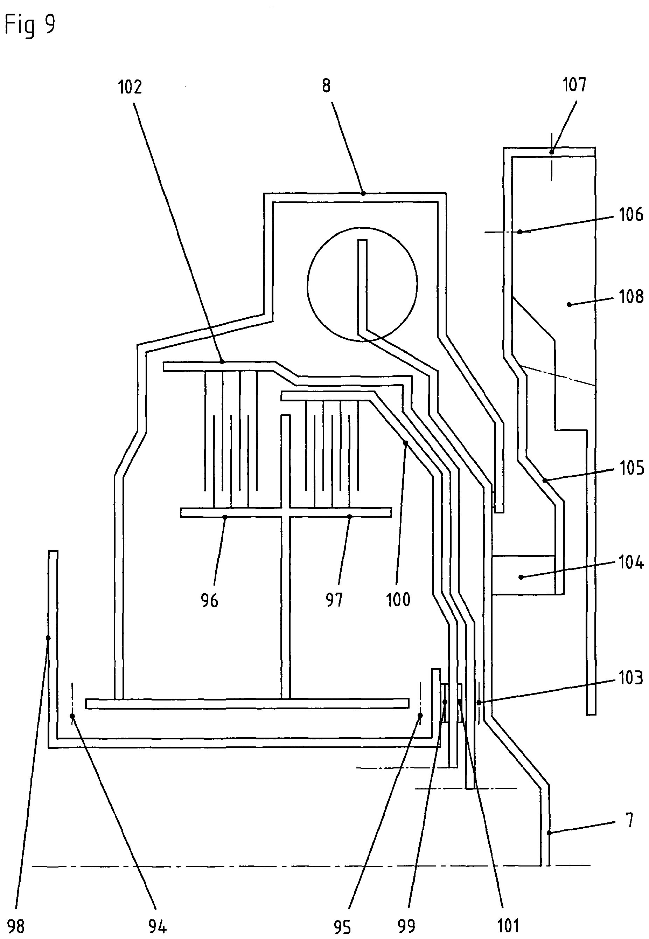

Figur 9 zeigt im Überblick schematisch mögliche Axiallagerungsstellen der gesamten Anordnung und zwar in den Axiallagern 94, 95, die die Innenlamellenträger 96, 97 radial gegenüber einem Kupplungsträger 98 abstützen sowie das Axiallager 99, das einen ersten Außenlamellenträger 100 gegenüber dem Kupplungsträger 98 axial abstützt sowie ein Axiallager 101 zur axialen Abstützung zwischen dem Außenlamellenträger 100 und einem weiteren Außenlamellenträger 102. Zusätzlich ist ein Axiallager 103 zur Abstützung des Primärelementes 7 gegenüber dem Außenlamellenträger 102 vorgesehen.

Das Primärelement 7 ist durch eine Schweiß- oder Schraubverbindung mit einer Torsionsschwingungsdämpfernabe 104 zusammengefügt, die ihrerseits mit einer Flexplatte 105 verbunden ist. Die Flexplatte 105 ist mittels einer Schraubverbindung 106 mit axialen Schrauben und/oder einer Radialverschraubung 107 mit einer Schwungscheibe 108 verbunden. Bei der Verschraubung 106, 107 können Langlöcher vorgesehen sein, die den Toleranzausgleich zwischen dem Primärelement 7 und der Flexplatte, der Schwungscheibe und der Kurbelwelle einzustellen erlauben.

Wichtig für die Erfindung ist grundsätzlich die axialspielfreie Verbindung zwischen dem Primärelement 7, der Flexplatte 105, dem Schwungrad 108 und dem in dieser Abbildung nicht dargestellten Teil der Kurbelwelle beziehungsweise einer mit dieser fest verbundenen Welle. Hierdurch werden Geräusche und Unwuchten sowie Abnutzungen vermieden, die durch axiale Relativbewegungen entstehen könnten.

### Bezugszeichenliste

1 Doppelkupplungseinrichtung
2 Kurbelwelle
4 Primärflansch
5 Primärelement
6 Sekundärelement
7 abtriebsseitiges Sekundärteilelement
8 antriebsseitiges Sekundärteilelement
9 antriebsseitige Halbschale
10 abtriebsseitige Halbschale
11 Verzahnung
12 Verzahnung
13 Sicherungsring
14 äußere Schraubenfeder
15 innere Schraubenfeder
16 Radialnadellager
17 Verzahnung
18 Sicherungsring
19 Federring
20 Vollwelle
21 Hohlwelle
22 Kupplungssupport
23 Radialnadellager
24 Pumpenantriebszahnrad
25 Radialnadellager
26 Radialnadellager
27 Radialnadellager
28 Nabe des Innenlamellenträgers der radial äußeren Kupplung
29 Nabe des Innenlamellenträgers der radial inneren Kupplung
30 Außenlamellenträger der radial äußeren Kupplung
31 Außenlamellenträger der radial inneren Kupplung
32 Innenlamellenträger der radial äußeren Kupplung
33 Innenlamellenträger der radial inneren Kupplung
34 Betätigungskolben der radial äußeren Kupplung
35 Betätigungskolben der radial inneren Kupplung
36 Außenlamellen der radial äußeren Kupplung
37 Innenlamellen der radial äußeren Kupplung
38 Außenlamellen der radial inneren Kupplung
39 Innenlamellen der radial inneren Kupplung
40 Axialnadellager
41 Axialnadellager
42 Axialnadellager
43 Axialnadellager
44 Radialnadellager
45 Radialnadellager
46 Schwungmasse
47 Schweißnaht
48 Seitenscheibe
49 Kupplungsnabe
50 Radialnadellager
51 Steckverzahnung
52 Steckverzahnung
53 Halbschale
54 Gleitschuh / Federaufteiler
55 Primärmitnehmer
56 Sekundärmitnehmer
57 zylindrischer Teil
58 Verzahnung
59 Außenverzahnung
60 zylindrischer Teil
61 Außenverzahnung
62 Innenverzahnung
63 zylindrischer Teil
64 Innenverzahnung
65 Außenverzahnung
66 zylindrischer Teil
67 Außenverzahnung
68 Innenverzahnung
69 Steckverzahnung
70 scheibenförmiger Teil
71 Loslager
72 Festlager
73 Axiallager
74 Radialstützlager
75 Teil einer Kurbelwelle
76 Schwungscheibe
77 Welle
78 Loslager
79 Getriebedeckel
80 Lager
80a Getriebewelle
81 Lager
82 Festlager
83 Lager
84 Lager
85 Radiallager
86 Antriebsseitige Halbschale
87 Radiallagerung
88 Axiales Spiel
89 Halbschale
90 Abtriebsseitige Kupplung
91 Getriebewelle
92 Axiale Lagerung
93 Innenlamellenträger
94 Axiallager
95 Axiallager
96 Innenlamellenträger
97 Innenlamellenträger
98 Kupplungsträger
99 Axiallager
100 Außenlamellenträger
101 Axiallager
102 Außenlamellenträger
103 Axiallager
104 Torsionsschwingungsdämpfernabe
105 Flexplatte
106 Schraubverbindung
107 Radialverschraubung
108 Schwungscheibe
K1 radial äußere Kupplung
K2 radial innere Kupplung
T Torsionsschwingungsdämpfer
ax Drehachse

## Patentansprüche

1. Kombination aus einer Kurbelwelle (2) und einem Torsionsschwingungsdämpfer mit einem antriebsseitigen, mit der Kurbelwelle (2) verbundenen Primärelement (5) und mit einem abtriebsseitigen Sekundärelement (6), welche zur Übertragung einer Drehbewegung koaxial drehbar und federelastisch miteinander gekoppelt sind, wobei das Primärelement (5) in axialer Richtung spielfrei mit der Kurbelwelle (2) mittelbar oder unmittelbar verbunden, das Primärelement (5) in Axialrichtung gegenüber dem Sekundärelement (6) verschiebbar ist, das Primärelement (5) oder das Sekundärelement (6) mit einem hohlen Ring verbunden ist, in dem Federelemente (14, 15) zur Kopplung des Primärelements mit dem Sekundärelement geführt sind, und der Ring wenigstens eine Öffnung zum Eingriff des jeweils anderen Elementes aufweist, wobei die Öffnung in Axialrichtung eine Bewegung des anderen Elementes erlaubt, **dadurch gekennzeichnet, dass** das Primärelement mittelbar oder unmittelbar in Axialrichtung an einem drehbaren, mit dem Sekundärelement verbundenen Teil gelagert ist und dass das Spiel des drehbaren Teils in Axialrichtung größer ist als das axiale Spiel der Kurbelwelle.

2. Kombination nach Anspruch 1, **dadurch gekennzeichnet, dass** das Primärelement (5) mit einer mit der Kurbelwelle (2) axial spielfrei verbundenen Schwungscheibe (76,108) verbunden ist.

3. Kombination nach Anspruch 1 oder 2, **dadurch gekennzeichnet, dass** das Primärelement (5) mit einer mit der Kurbelwelle (2) mit oder ohne Zwischenschaltung einer Schwungscheibe (76, 108) verbundenen Flexplatte (105) verbunden ist.

4. Kombination nach einem der vorangehenden Ansprüche,
**dadurch gekennzeichnet, dass** das Primärteil mittelbar oder unmittelbar radial gelagert ist.

5. Kombination nach einem der vorangehenden Ansprüche,
**dadurch gekennzeichnet, dass** die Fügeverbindung zwischen dem Primärelement (5) und der Schwungscheibe (76, 108) Mittel (106, 107) zum Ausgleich der Toleranzen bei der Montage aufweist.

6. Kombination nach einem der vorangehenden Ansprüche,
**dadurch gekennzeichnet, dass** das Sekundärelement (6) eine Einrichtung (26, 44, 45) zum Aufnehmen radialer Kräfte aufweist.

7. Kombination nach Anspruch 6, **dadurch gekennzeichnet, dass** die Einrichtung (26, 44, 45) zum Aufnehmen radialer Kräfte darin besteht, dass das Sekundärelement (6) selbst drehbar, vorzugsweise radial, besonders bevorzugt mittels eines Wälz- oder Gleitlagers gelagert ist.

8. Kombination nach Anspruch 6 oder 7, **dadurch gekennzeichnet, dass** das Sekundärelement (6) ein der Abtriebsseite zugewandtes Sekundärteilelement (7) umfasst welches drehbar, insbesondere radial, gelagert ist und/oder dass das Sekundärelement (6) ein der Antriebsseite zugewandtes Sekundärteilelement (8) umfasst welches drehbar, insbesondere radial, gelagert ist.

9. Kombination nach einem der Ansprüche 6 bis 8, **dadurch gekennzeichnet, dass** das Sekundärelement (6), insbesondere das der Abtriebsseite zugewandte Sekundärteilelement (7) und/oder das der Antriebsseite zugewandte Sekundärteilelement (8), mittelbar oder unmittelbar auf einer Welle (20) oder auf einem, vorzugsweise nicht drehenden, den Torsionsschwingungsdämpfer (T) tragenden Träger (22), besonders bevorzugt auf einer Primärnabe (4) des Primärelements (5), drehbar, insbesondere radial, gelagert ist.

10. Kombination nach einem der Ansprüche 6 bis 8, **dadurch gekennzeichnet, dass** das Sekundärelement an einem Kupplungsgehäuse oder einem Getriebegehäuse, vorzugsweise einem Gehäusedeckel, radial gelagert ist.

11. Kombination nach einem der vorangehenden Ansprüche,
**dadurch gekennzeichnet, dass** das Sekundärelement (6), insbesondere das der Abtriebsseite zugewandte Sekundärteilelement (7) und/oder das der Antriebsseite zugewandte Sekundärteilelement (8), vorzugsweise an dem Primärelement (5), axial gelagert ist.

## Claims

1. Combination comprising a crankshaft (2) and a torsional vibration damper with a drive-side primary element (5), which is connected to the crankshaft (2), and with an output-side secondary element (6) which are coupled to one another in a coaxially rotatable and resilient manner for the transmission of a rotational movement, the primary element (5) being connected indirectly or directly to the crankshaft (2) without play in the axial direction, it being possible for the primary element (5) to be displaced in the axial direction with respect to the secondary element (6), the primary element (5) or the secondary element (6) being connected to a hollow ring, in which spring elements (14, 15) for coupling the primary element to the secondary element are guided, and the ring having at least one opening for the engagement of the respective other element, the opening allowing a movement of the other element in the axial direction, **characterized in that** the primary element is mounted indirectly or directly in the axial direction on a rotatable part which is connected to the secondary element, and **in that** the play of the rotatable part in the axial direction is greater than the axial play of the crankshaft.

2. Combination according to Claim 1, **characterized in that** the primary element (5) is connected to a flywheel (76, 108) which is connected to the crankshaft (2) in an axially play-free manner.

3. Combination according to Claim 1 or 2, **characterized in that** the primary element (5) is connected to a flexplate (105) which is connected to the crankshaft (2) with or without a flywheel (76, 108) being connected in between.

4. Combination according to one of the preceding claims, **characterized in that** the primary part is radially mounted indirectly or directly.

5. Combination according to one of the preceding claims, **characterized in that** the joint between the primary element (5) and the flywheel (76, 108) has means (106, 107) for compensating for the tolerances during the assembly.

6. Combination according to one of the preceding claims, **characterized in that** the secondary element (6) has a device (26, 44, 45) for absorbing radial forces.

7. Combination according to Claim 6, **characterized in that** the device (26, 44, 45) for absorbing radial forces consists **in that** the secondary element (6) itself is mounted rotatably, preferably radially, particularly preferably by means of an anti-friction bearing or a plain bearing.

8. Combination according to Claim 6 or 7, **characterized in that** the secondary element (6) comprises a secondary part element (7) which faces the output side and is mounted rotatably, in particular radially, and/or **in that** the secondary element (6) comprises a secondary part element (8) which faces the drive side and is mounted rotatably, in particular radially.

9. Combination according to one of Claims 6 to 8, **characterized in that** the secondary element (6), in particular the secondary part element (7) which faces the output side and/or the secondary part element (8) which faces the drive side, is mounted rotatably, in particular radially, indirectly or directly on a shaft (20) or on a (preferably non-rotating) carrier (22) which carries the torsional vibration damper (T), particularly preferably on a primary hub (4) of the primary element (5).

10. Combination according to one of Claims 6 to 8, **characterized in that** the secondary element is mounted radially on a clutch housing or a transmission housing, preferably a housing cover.

11. Combination according to one of the preceding claims, **characterized in that** the secondary element (6), in particular the secondary part element (7) which faces the output side and/or the secondary part element (8) which faces the drive side, is mounted axially, preferably on the primary element (5).

## Revendications

1. Combinaison d'un vilebrequin (2) et d'un amortisseur de vibrations de torsion avec un élément primaire (5) du côté de l'entraînement, connecté au vilebrequin (2) et avec un élément secondaire (6) du côté de la sortie, lesquels sont accouplés l'un à l'autre de manière à pouvoir tourner coaxialement et de manière élastique à ressort pour transmettre un mouvement de rotation, l'élément primaire (5) étant connecté de manière directe ou indirecte dans la direction axiale sans jeu au vilebrequin (2), l'élément primaire (5) pouvant être déplacé dans la direction axiale par rapport à l'élément secondaire (6), l'élément primaire (5) ou l'élément secondaire (6) étant connecté à une bague creuse, dans laquelle des éléments de ressort (14, 15) sont guidés pour l'accouplement de l'élément primaire à l'élément secondaire, et la bague présentant au moins une ouverture pour l'engagement de l'autre élément respectif, l'ouverture dans la direction axiale permettant un déplacement de l'autre élément, **caractérisée en ce que** l'élément primaire est supporté directement ou indirectement dans la direction axiale sur une partie rotative connectée à l'élément secondaire et **en ce que** le jeu de la partie rotative dans la direction axiale est supérieur au jeu axial du vilebrequin.

2. Combinaison selon la revendication 1, **caractérisée en ce que** l'élément primaire (5) est connecté à un volant d'inertie (76, 108) connecté axialement sans jeu au vilebrequin (2).

3. Combinaison selon la revendication 1 ou 2, **caractérisée en ce que** l'élément primaire (5) est connecté à une plaque flexible (105) connectée au vilebrequin (2) avec ou sans interposition d'un volant d'inertie (76, 108).

4. Combinaison selon l'une quelconque des revendications précédentes, **caractérisée en ce que** la partie primaire est supportée radialement directement ou indirectement.

5. Combinaison selon l'une quelconque des revendications précédentes, **caractérisée en ce que** la liaison d'assemblage entre l'élément primaire (5) et le volant d'inertie (76, 108) présente des moyens (106, 107) pour compenser les tolérances lors du montage.

6. Combinaison selon l'une quelconque des revendications précédentes, **caractérisée en ce que** l'élément secondaire (6) présente un dispositif (26, 44, 45) pour recevoir des forces radiales.

7. Combinaison selon la revendication 6, **caractérisée en ce que** le dispositif (26, 44, 45) pour recevoir des forces radiales est constitué par le fait que l'élément secondaire (6) est lui-même supporté à rotation, de préférence radialement, particulièrement préférablement au moyen d'un palier à roulement ou d'un palier lisse.

8. Combinaison selon la revendication 6 ou 7, **caractérisée en ce que** l'élément secondaire (6) comprend un élément partiel secondaire (7) tourné vers le côté de sortie, lequel est supporté à rotation, en particulier radialement, et/ou **en ce que** l'élément secondaire (6) comprend un élément partiel secondaire (8) tourné vers le côté d'entraînement, lequel est supporté à rotation, en particulier radialement.

9. Combinaison selon l'une quelconque des revendications 6 à 8, **caractérisée en ce que** l'élément secondaire (6), en particulier l'élément partiel secondaire (7) tourné vers le côté de sortie et/ou l'élément partiel secondaire (8) tourné vers le côté d'entraînement, est supporté à rotation, en particulier radialement, directement ou indirectement sur un arbre (20) ou sur un support (22), de préférence non rotatif, portant l'amortisseur de vibrations de torsion (T), particulièrement préférablement sur un moyeu primaire (4) de l'élément primaire (5).

10. Combinaison selon l'une quelconque des revendications 6 à 8, **caractérisée en ce que** l'élément secondaire est supporté radialement sur un boîtier d'embrayage ou un boîtier de transmission, de préférence un couvercle de boîtier.

11. Combinaison selon l'une quelconque des revendications précédentes, **caractérisée en ce que** l'élément secondaire (6), en particulier l'élément partiel secondaire (7) tourné vers le côté de sortie et/ou l'élément partiel secondaire (8) tourné vers le côté d'entraînement, est supporté axialement, de préférence sur l'élément primaire (5).
